# EUROPÄISCHE PATENTSCHRIFT

(11) **EP 2 923 974 B1**
(45) Veröffentlichungstag und Bekanntmachung des Hinweises auf die Patenterteilung: **20.07.2016**
(21) Anmeldenummer: 15157912.5
(22) Anmeldetag: 06.03.2015
(51) Int. Cl.: B65G 47/71, B65G 1/04

(54) **Vorrichtung und Verfahren zum platzsparenden Anordnen von Hängewaren**
Device and method for arranging suspended goods in a space saving manner
Dispositif et procédé d'agencement peu encombrant de marchandises suspendues

(30) Priorität: 25.03.2014 DE 102014205545
(43) Veröffentlichungstag der Anmeldung: 30.09.2015
(73) Patentinhaber: Dürkopp Fördertechnik GmbH, 33719 Bielefeld (DE)
(72) Erfinder: Wend, Michael, 33619 Bielefeld (DE)
(74) Vertreter: Rau, Schneck & Hübner Patentanwälte Rechtsanwälte PartGmbB

(56) Entgegenhaltungen:
- EP-A1- 0 310 102
- EP-A1- 1 293 455
- WO-A1-2011/004131
- DE-A1- 4 100 234
- DE-U1- 9 413 209

## Beschreibung

Die Erfindung betrifft eine Vorrichtung und ein Verfahren zum platzsparenden Anordnen von Hängewaren, insbesondere zum Bilden eines Blockes von Hängewaren für eine Einlagerung des Blockes in ein Hochregallager.

EP 0 310 102 A1 offenbart eine gattungsgemäße Vorrichtung zum Transport von Kunststoffflaschen. In einem Pufferbereich können die Flaschen in nebeneinander angeordneten Transportbahnen transportiert werden. Weitere Transportvorrichtungen sind bekannt aus der DE 41 00 234 A1, DE 41 31 209 U1 und der WO 2011/004131 A1.

Die DE 10 2012 205 735 A1 offenbart eine Staustrecke für eine Förderanlage in einem Hochregallager. Die Staustrecke ermöglicht das Bilden eines Blockes von Hängewaren, die anschließend in ein Hochregal transportiert und dort gelagert werden.

Der Erfindung liegt die Aufgabe zugrunde, eine Vorrichtung und ein Verfahren zum platzsparenden Anordnen von Hängewaren derart zu verbessern, dass das Anordnen der Hängewaren und ein eventuell anschließendes Einlagern der Hängewaren in ein Hochregallager zuverlässig und effizient, insbesondere mit einer erhöhten Hängewaren-Dichte, erfolgen kann.

Diese Aufgabe wird erfindungsgemäß durch die Merkmale im Anspruch 1 gelöst. Erfindungsgemäß wurde erkannt, dass eine Anordeneinheit, die zum Anordnen von Hängewaren dient, mindestens zwei nebeneinander angeordnete Transportschienen aufweist. Die Transportschienen sind bezogen auf eine Transportrichtung, entlang der die Hängewaren in der Vorrichtung transportiert werden, nebeneinander angeordnet. Erfindungsgemäß sind die Transportschienen zueinander und insbesondere zu der Transportrichtung parallel angeordnet. Dadurch ist es möglich, die der Anordeneinheit, insbesondere mittels einer Zuführeinheit, zugeführten Hängewaren, die beispielsweise aus einem Wareneingang stammen, möglichst dicht in der Anordeneinheit anzuordnen. Die in der Anordeneinheit angeordneten Hängewaren bilden einen Block von Hängewaren. Der Block weist eine möglichst große Dichte von Hängewaren auf. Die Hängewaren sind entlang der Transportrichtung mit einer vergrößerten Dichte angeordnet. Zudem ist es möglich, die Gesamtdichte der Hängewaren in der Anordeneinheit zu steigern. Ein Abstand zwischen zwei benachbarten Transportschienen ist kleiner als eine Breite der Hängewaren. Die Breite der Hängewaren ist senkrecht zur Transportrichtung orientiert. Die Hängewaren benachbarter Transportschienen können überlappend angeordnet sein. Das bedeutet insbesondere, dass Hängewaren, die an einer ersten Transportschiene angeordnet sind, mit Hängewaren, die an einer zweiten, benachbarten Transportschiene angeordnet sind, in Kontakt kommen können. Insbesondere kontaktieren sich die Hängewaren an Stirnflächen, die insbesondere senkrecht zur Transportrichtung ausgerichtet sind. Die Vorrichtung, insbesondere die Anordeneinheit, ermöglichlen eine platzsparende Anordnung der Hängewaren, insbesondere in einer Richtung senkrecht zu der Transportrichtung. Die Hängewaren sind jeweils mittels eines Adapters an Förderschienen der Förderanlage aufgenommen. Insbesondere sind die Hängewaren Bekleidungsstücke, die an Kleiderbügeln aufgehängt sind. Jeweils ein Kleiderbügel ist in einem Adapter aufgenommen. Die erfindungsgemäße Vorrichtung ermöglicht gegenüber einer Anordeneinheit mit einer einzigen Transportschiene eine dichtere Anordnung von Hängewaren vor allem für den Fall, dass eine Länge des Adapters entlang der Transportrichtung größer ist als eine Länge der Hängeware in Transportrichtung. Mit der erfindungsgemäßen Vorrichtung kann die Anzahl der Hängewaren in dem Block gegenüber einer Anordeneinheit mit einer einzigen Transportschiene erhöht, insbesondere verdoppelt, werden. Besonders vorteilhaft ist eine Anordeneinheit mit genau zwei Transportschienen. Es ist aber auch möglich, mehrere, beispielsweise drei, vier, fünf oder mehr als fünf Transportschienen in der Anordeneinheit nebeneinander anzuordnen. Die erfindungsgemäße Vorrichtung ermöglicht das Bilden eines Blockes von Hängewaren mit hoher Hängewaren-Dichte. Dadurch kann der Hängewaren-Durchsatz gesteigert werden. Das Bilden des Blockes und eine anschließende Einlagerung des Blockes in das Hochregallager ist effizient und zuverlässig. Das erfindungsgemäße platzsparende Anordnen der Hängewaren ist in vielen Bereichen der Fördertechnik vorteilhaft einsetzbar. Neben dem beschriebenen vorteilhaften Bilden eines Blockes von Hängewaren mit erhöhter Warendichte, ist eine erfindungsgemäße Vorrichtung auch in einem Hochregal selbst möglich. Dann ist es möglich, die Hängewaren platzsparend in einem Hochregal einzulagern. Die erfindungsgemäße Vorrichtung kann auch als Längenbedarfs-Ermittlungseinheit derart eingesetzt werden, dass die Hängewaren in der Anordeneinheit platzsparend angeordnet werden. Mittels eines Sensors wird die Länge der platzsparend angeordneten Hängewaren entlang der Transportrichtung ermittelt und einer gegebenenfalls zentral angeordneten Steuereinheit übermittelt. Dadurch ist für die weitere Handhabung der Hängewaren klar, wie groß ein späterer Speicherbedarf, also eine Kleiderstangenlänge, an welchen die Hängewaren aufgehängt werden, sein muss.

Vorteilhaft ist eine Vorrichtung mit einer entlang der Transportrichtung der Anordeneinheit stromaufwärts angeordneten Zuführvereinzelungseinheit zum vereinzelten Zuführen der Hängewaren. Dadurch ist ein kontrolliertes und gezieltes vereinzeltes Zuführen der Hängewaren zu der Anordeneinheit gewährleistet.

Vorteilhaft ist eine Vorrichtung mit einer Zuführweiche zum gezielten Zuführen der Hängewaren zu jeweils einer der mindestens zwei Transportschienen. Die Zuführweiche ist insbesondere entlang der Transportrichtung zwischen einer Zuführvereinzelungseinheit und der Anordeninheit angeordnet. Mittels der Zuführweiche kann eine der Transportschienen gezielt angesteuert werden, um eine möglichst hohe Hängewaren-Dichte entlang der Transportrichtung in der Anordeneinheit zu ermöglichen.

Vorteilhaft ist eine Vorrichtung, bei der die Anordeneinheit als Staueinheit ausgeführt ist, die ein Stauelement zum Stauen des Transports der Hängewaren an den mindestens zwei Transportschienen entlang der Transportrichtung aufweist. Das Stauelement ist in einem Endabschnitt der Staueinheit angeordnet. Das Stauen der Hängewaren erfolgt dadurch, dass ein Weiterfördern der Hängewaren unterbrochen wird. Mittels einer Abführeinheit werden die in der Staueinheit gestauten Hängewaren abgeführt und beispielsweise in ein Hochregallager eingelagert. Das Stauelement ist insbesondere der Abführeinheit zugewandt. Insbesondere ist das Stauelement als zweiflüglige Tür ausgeführt, die zwischen einer geöffneten Position und einer geschlossenen Position verschwenkbar ist. In der geöffneten Position kann der Block der Hängeware von der Staueinheit zu der Abführeinheit transportiert werden. In der geschlossenen Position ist ein Abführen der Hängewaren aus der Staueinheit verhindert. In der geschlossenen Position des Stauelements erfolgt das Stauen der Hängewaren. Es sind auch andere Ausführungen des Stauelements möglich wie beispielsweise eine einflüglige Tür oder an den Transportschienen direkt angeordnete Stauelemente, die einen Weitertransport eines Adapters mit einer Hängeware blockiert.

Vorteilhaft ist eine Vorrichtung, bei der die Anordeneinheit ein Stopperelement zum Stoppen des Zuführens der Hängewaren in die Anordeneinheit entlang der Transportrichtung aufweist. Das Stopperelement ist in einem Anfangsabschnitt der Anordeneinheit angeordnet. Das Stopperelement ist insbesondere der Zuführeinheit zugewandt. Das Stopperelement garantiert, dass das Zuführen von Hängewaren in die Anordeneinheit gestoppt wird, sobald der Block der Hängewaren vollständig ist. Die Vollständigkeit des Blockes der Hängewaren kann sich aus der Anzahl der gestauten Hängewaren und/oder der Länge der aufgestauten Waren entlang der Transportrichtung ergeben.

Besonders vorteilhaft ist eine Vorrichtung, bei der genau ein Stopperelement vorgesehen ist, das allen Transportschienen gleichermaßen zugeordnet ist. Es ist also insbesondere nicht erforderlich, für jede Transportschiene separat ein Stopperelement vorzusehen. Der konstruktive und insbesondere der apparative Aufwand für die Vorrichtung sind reduziert. Insbesondere ist der Steuerungsaufwand der Vorrichtung reduziert, wenn genau ein Stopperelement das Stoppen des Zuführens der Hängewaren für alle Transportschienen ermöglicht. Das Stopperelement ist insbesondere quer und insbesondere senkrecht zur Transportrichtung orientiert.

Vorteilhaft ist eine Vorrichtung, bei der die Anordeneinheit einen Füllstandssensor zum Erfassen eines Füllstands der Anordeneinheit aufweist. Der Füllstand der Anordeneinheit ergibt sich insbesondere aus der Anzahl der in der Anordeneinheit angeordneten Hängewaren. Da die Hängewaren jeweils über einen Kleiderbügel in einem standardisierten Adapter aufgenommen sind und jeder Adapter eine identische Länge entlang der Transportrichtung aufweist, ergibt sich aus der Anzahl der Hängewaren direkt die Länge des Blockes entlang der Transportrichtung.

Besonders vorteilhaft ist eine Vorrichtung, bei der der Füllstandssensor eine Leseinheit aufweist, die zum Lesen eines Hängewarencodes dient, der jeweils einer Hängeware zugeordnet ist. Insbesondere ist der Hängewarencode jeweils an dem Adapter, der zur Aufnahme der Hängeware, insbesondere mittels eines Kleiderbügels, dient, angebracht. Der Hängewarencode kann beispielsweise als Strichcode oder als Transponder ausgeführt sein. Die Leseeinheit ist derart ausgeführt, dass sie den Hängewarencode, insbesondere automatisiert, lesen kann. Insbesondere ist die Leseeinheit mit einer Zähleinheit in Signalverbindung. Die Zähleinheit des Füllstandssensors erzeugt ein Füllstandssignal. Sobald ein Soll-Füllstand erreicht ist, kann der Füllstandssensor, der insbesondere direkt oder indirekt mit dem Stopperelement der Anordeneinheit verbunden ist, das Füllstandssignal an das Stopperelement übermitteln. In diesem Fall wird das Zuführen weiterer Hängewaren in die Anordeneinheit mittels des Stopperelements gestoppt. Dadurch ist gewährleistet, dass die Solllänge des Blocks der Hängewaren nicht unbeabsichtigt überschritten wird. Ein nachträgliches Trennen einer Hängeware von dem Block der Hängewaren wird dadurch vermieden. Die Effizienz der Handhabung der Hängewaren ist dadurch zusätzlich verbessert. Insbesondere kann eine Hängeware, die den Abschluss eines Blocks bildet, identifiziert werden.

Vorteilhaft ist eine Vorrichtung mit einer entlang der Transportrichtung der Anordeneinheit stromabwärts angeordnete Abführvereinzelungseinheit zum vereinzelten Abführen der Hängewaren aus der Anordeneinheit. Dadurch wird das Abführen der Hängewaren von den mindestens zwei nebeneinander angeordneten Transportschienen der Anordeneinheit zu der Abführeinheit vereinfacht. Insbesondere kann das Abführen des Blocks der Hängewaren automatisiert erfolgen.

Vorteilhaft ist eine Vorrichtung mit einer entlang der Transportrichtung der Anordeneinheit stromabwärts angeordneten Abführweiche zum Zusammenführen der an den mindestens zwei Transportschienen aufgestauten Hängewaren. Die Abführweiche ermöglicht also, dass die Abführeinheit lediglich eine Transportschiene aufweist. Es ist insbesondere nicht erforderlich, dass in der Abführeinheit die gleiche Anzahl an Transportschienen vorgesehen ist wie in der Anordeneinheit.

Vorteilhaft ist eine Vorrichtung mit einer Steuerungseinheit zum gesteuerten Transport der Hängewaren. Die Steuerungseinheit ist insbesondere mit der Anordeneinheit, einem Füllstandssensor, einer Zuführvereinzelungseinheit, einer Zuführweiche, einer Abführvereinzelungseinheit, einer Abführweiche, einem Stauelement und/oder einem Stopperelement in Signalverbindung. Die Steuerungseinheit ermöglicht einen automatisierten Transport der Hängewaren durch die Vorrichtung entlang der Transportrichtung.

Es ist eine weitere Aufgabe der Erfindung, ein Verfahren zum platzsparenden Anordnen von Hängewaren, insbesondere zum Bilden eines Blockes von Hängewaren, insbesondere für eine Einlagerung der Hängewaren in ein Hochregallager derart zu verbessern, dass es vereinfacht und effizient durchführbar ist.

Diese Aufgabe wird erfindungsgemäß durch die Merkmale im Anspruch 12 gelöst. Erfindungsgemäß wurde erkannt, dass Hängewaren, die entlang einer Transportrichtung, insbesondere mittels einer Zuführeinheit, zugeführt werden, auf mindestens zwei Transportschienen einer Anordeneinheit platzsparend aufgeteilt werden. Die Transportschienen sind bezogen auf die Transportrichtung nebeneinander und parallel zueinander und zu der Transportrichtung angeordnet. Dadurch kann die Hängewarendichte in der Anordeneinheit gesteigert werden. Dies gilt insbesondere für Hängewaren, die entlang der Transportrichtung eine Länge aufweisen, die kleiner ist als eine Länge eines Adapters entlang der Transportrichtung.

Mittels der Anordeneinheit werden die aufgeteilten Hängewaren platzsparend angeorden, um einen Block von Hängewaren zu bilden. Anschließend können die Hängewaren, insbesondere mittels einer Abführeinheit, abgeführt und beispielsweise in ein Hochregallager eingelagert werden.

Die Vorteile des erfindungsgemäßen Verfahrens entsprechen im Wesentlichen den Vorteilen der erfindungsgemäßen Vorrichtung, worauf hiermit verwiesen wird.

Weitere Vorteile, Merkmale und Einzelheiten der Erfindung ergeben sich aus der nachfolgenden Beschreibung eines Ausführungsbeispiels anhand der Zeichnung. Es zeigen:
- Fig. 1: eine Seitenansicht einer erfmdungsgemäßen Vorrichtung mit einer Staueinheit als Anordeneinheit in einer geschlossenen Position zum Stauen von Hängewaren,
- Fig. 2: eine Fig. 1 entsprechende Draufsicht der Vorrichtung,
- Fig. 3: eine Fig. 1 entsprechende Seitenansicht der Vorrichtung mit der Staueinheit in einer geöffneten Anordnung zum Abführen der Hängewaren, und
- Fig. 4: eine Fig. 3 entsprechende Draufsicht der Vorrichtung.

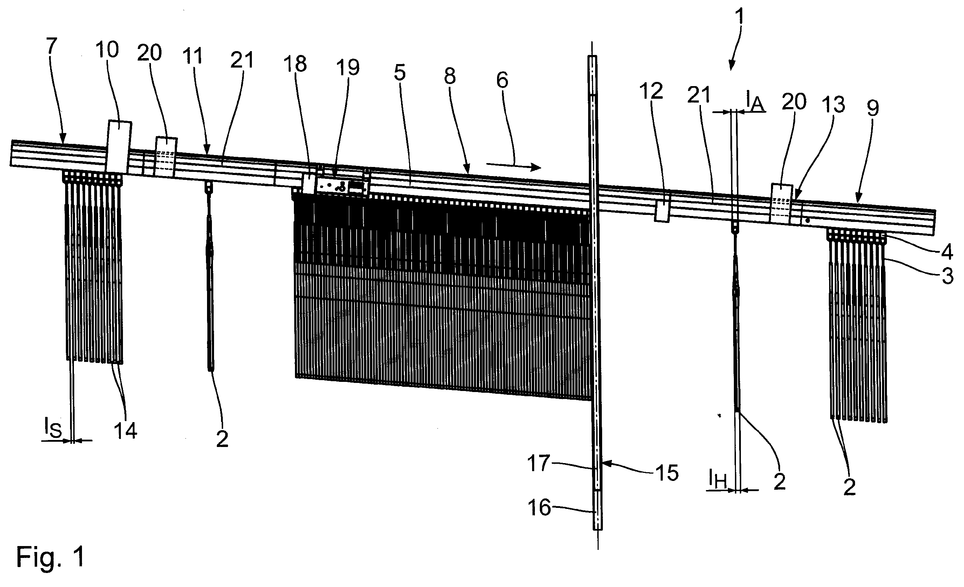

Fig. 1 bis 4 zeigt eine Vorrichtung 1, die beispielsweise in einer nicht dargestellten Förderanlage zum Handhaben von Einzelwaren angeordnet sein kann. Die gezeigte Vorrichtung dient zum Handhaben von Hängewaren 2. Die Hängewaren 2 werden beispielsweise über einen nicht gezeigten Wareneingang in die Förderanlage transportiert. Die Hängewaren 2 sollen beispielsweise in ein nicht gezeigten Hochregallager eingelagert werden. Die Vorrichtung 1 dient zum automatischen Bilden eines Blockes mehrerer Hängewaren 2 für die Einlagerung des Blockes in das Hochregallager.

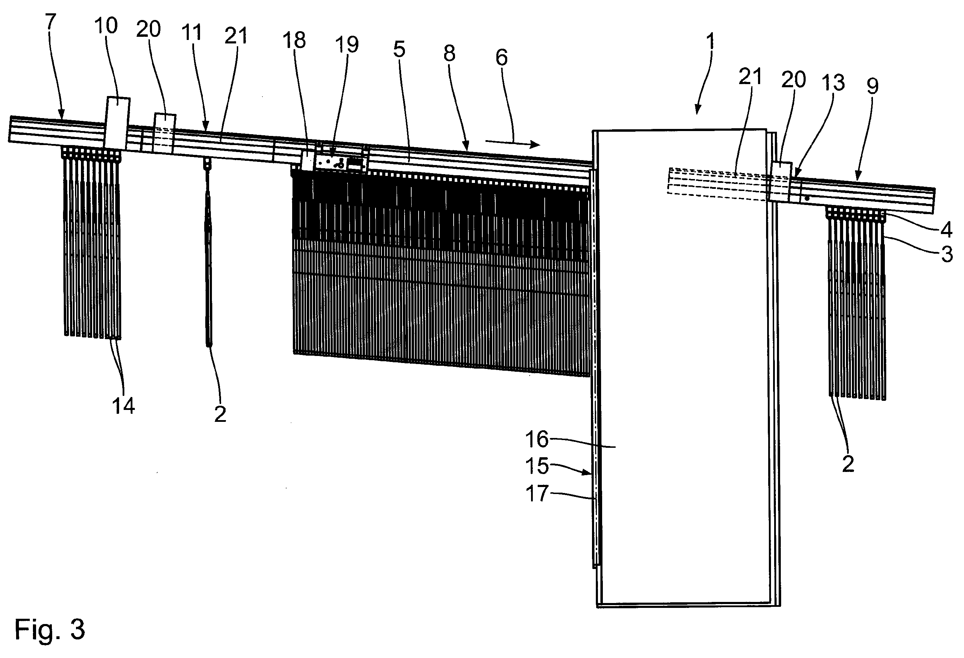

Gemäß dem gezeigten Ausführungsbeispiel handelt es sich bei der Hängeware 2 um Kleidungsstücke, die an einem Kleiderbügel 3 jeweils aufgehängt sind. Der Kleiderbügel 3 ist in einer Aufnahme eines Adapters 4 aufgenommen. Der Adapter 4 kann in der Vorrichtung 1 an dafür vorgesehenen Transportschienen 5 entlang einer Transportrichtung 6 transportiert werden. Wie es ist insbesondere aus den Seitenansichten gemäß Fig. 1 und 3 ergibt, sind die Transportschienen 5 gegenüber der Horizontalen geneigt angeordnet. Ein Neigungswinkel beträgt beispielsweise zwischen 1° und 20°, insbesondere zwischen 5° und 15° und insbesondere etwa 10°. Wesentlich ist, dass der Neigungswinkel derart gewählt ist, dass eine selbsttätige Förderung der Hängewaren 2 entlang der Transportschienen 5, insbesondere in Folge der Schwerkraft, ermöglicht ist. Dadurch ist ein selbsttätiger Transport der Hängewaren 2 über den Adapter 4 an den Transportschienen 5 möglich in Folge der Schwerkraft. Es ist auch möglich, einen zusätzlichen Förderantrieb vorzusehen, um das Fördern bzw. den Transport der Adapter 4 entlang der Transportrichtung 6 zu vereinfachen.

Die Vorrichtung 1 umfasst eine Zuführeinheit 7 zum Zuführen der Hängewaren 2 entlang der Transportrichtung 6. Die Vorrichtung 1 umfasst ferner eine Anordeneinheit, die als Staueinheit 8 zum Stauen der Hängewaren 2 ausgeführt ist. Die Vorrichtung 1 umfasst ferner eine Abführeinheit 9 zum Abführen der gestauten Hängewaren 2 und beispielsweise für ein Einlagern in das Hochregallager. Entlang der Transportrichtung 6 ist in der Vorrichtung 1 zunächst die Zuführeinheit 7, stromabwärts hierzu die Staueinheit 8 und stromabwärts hierzu die Abführeinheit 9 angeordnet. Zwischen der Zuführeinheit 7 und der Staueinheit 8 sind entlang der Transportrichtung 6 eine Zuführvereinzelungseinheit 10 zum vereinzelten Zuführen der Hängewaren 2 und eine Zuführweiche 11 zum gezielten Zuführen der Hängewaren 2 vorgesehen. Entlang der Transportrichtung 6 sind zwischen der Staueinheit 8 und der Abführeinheit 9 eine Abführvereinzelungseinheit 12 zum vereinzelten Abführen der Hängewaren 2 aus der Staueinheit 8 und eine Abführweiche 13 zum Zusammenführen der aufgestauten Hängewaren 2 angeordnet.

Die Adapter 4 tragen gemäß dem gezeigten Ausführungsbeispiel jeweils einen Hängewarencode, über den die Hängeware 2 eindeutig identifizierbar ist. Der Code kann beispielsweise als Strichcode oder in Form eines Transponders ausgeführt sein. Entlang der Transportrichtung 6 weist der Adapter 4 eine Adapterlänge 1_{A} auf, die größer ist als eine entlang der Transportrichtung 6 orientierte Hängewarenlänge 1_{H}. Gemäß dem gezeigten Ausführungsbeispiel beträgt die Adapterlänge 1_{A} beispielsweise 22 mm. Typische Hängewarenlängen 1_{H} betragen zwischen 11 mm und 13 mm. Dadurch, dass 1_{A} > 1_{H} sind die Hängewaren 2 derart angeordnet, dass zwischen zwei entlang der Transportrichtung 6 benachbarten Hängewaren 2 jeweils ein Spalt 14 resultiert. Der Spalt 14 weist eine entlang der Transportrichtung 6 orientierte Spaltlänge 1_{S} auf. Die Spaltlänge 1_{S} ist abhängig von der Adapterlänge 1_{A} und der Hängewarenlänge 1_{H}. Es gilt: 1_{S} = 1_{A} - 1_{H}.

Im Folgenden wird die Staueinheit 8 näher erläutert. Die Staueinheit 8 umfasst zwei identische, parallel nebeneinander angeordnete Transportschienen 5. Eine senkrechte Verbindungslinie zwischen den beiden Transportschienen 5 ist jeweils horizontal orientiert, wobei aufgrund der geneigten Anordnung der Transportschienen 5 verschiedene senkrechte Verbindungslinien existieren. Die Transportschienen 5 sind gemäß dem gezeigten Ausführungsbeispiel eng benachbart, nebeneinander angeordnet. Insbesondere liegen die beiden Transportschienen 5 mit ihren Seitenwänden aneinander an. Es ist auch denkbar, dass die Transportschienen 5 beabstandet zueinander angeordnet sind, wobei ein maximaler horizontaler Abstand zwischen den beiden Transportschienen 5 höchstens das 3fache der Breite einer Transportschiene 5 selbst, höchstens das 2fache und insbesondere höchstens das 1,5fache der Breite der Transportschienen 5 beträgt. Wesentlich ist, dass der Abstand der Transportschienen 5 zueinander möglichst klein ist. Die Staueinheit 8 ist besonders kompakt und robust ausgeführt. Die Transportschienen 5 der Staueinheit 8 bilden eine Einheit und sind fest miteinander verbunden. Abstandshalter, die eine gezielte beabstandete Anordnung der Transportschienen 5 zueinander ermöglichen, sind entbehrlich.

Die Hängewaren 2 sind entlang der Transportrichtung 6 in der Staueinheit 8 wechselweise auf jeweils einer der beiden Transportschienen 5 angeordnet. Dadurch kann die Hängewarendichte entlang der Transportrichtung 6 erhöht werden, da jeweils eine Hängeware 2 der einen Transportschiene 5 in einen Spalt 14 zwischen zwei benachbarten Hängewaren 2 der jeweils anderen Transportschiene 5 angeordnet ist.

Gemäß dem gezeigten Ausführungsbeispiel umfasst die Vorrichtung 1 genau zwei Transportschienen. In Abhängigkeit der Adapterlänge 1_{A} und der Hängewarenlänge 1_{H} kann es vorteilhaft sein, mehr als zwei Transportschienen 5 in der Staueinheit 8 vorzusehen.

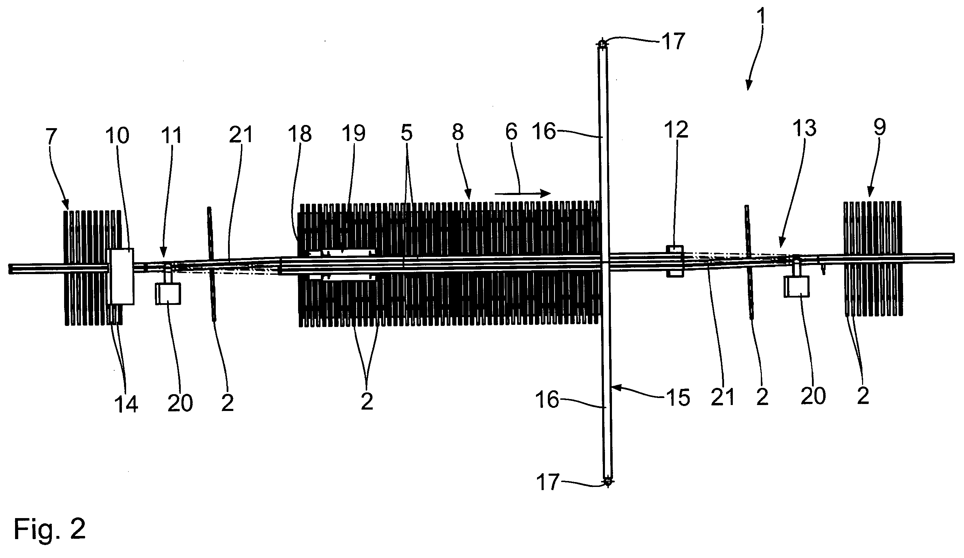

Die Staueinheit 8 umfasst eine zweiflüglige Tür als Stauelement 15. Die beiden Flügel 16 sind jeweils um eine vertikale Schwenkachse 17 schwenkbar ausgeführt. In der in Fig. 1, 2 gezeigten geschlossenen Anordnung des Stauelements 15 sind die Flügel 16 jeweils senkrecht zur Transportrichtung 6 angeordnet (vgl. Fig. 2). Die Hängewaren 2 können das Stauelement 15 in dieser Anordnung nicht passieren. Die Hängewaren 2 werden an dem Stauelement 15 der Staueinheit 8 gestaut. Dadurch wird der Block der Hängewaren 2 gebildet.

In der aufgestauten Anordnung der Hängewaren 2 ist zwischen zwei entlang der Transportrichtung 6 benachbart angeordneten Hängewaren 2 kein Spalt vorgesehen. Es ist auch möglich, dass zwischen den Hängewaren 2 in der aufgestauten Anordnung in der Staueinheit 8 jeweils ein Spalt resultiert. Jedenfalls ist ein Spalt zwischen zwei benachbart angeordneten Hängewaren 2 in der Staueinheit 8 kleiner, weist also eine geringere Spaltlänge auf, als der Spalt 14 zwischen zwei benachbarten Hängewaren 2 in der Zuführeinheit 7. Dadurch, dass die Spaltlänge in der Staueinheit 8 gegenüber der Zuführeinheit 7 reduziert ist, sind die Hängewaren 2 in der Staueinheit 8 dichter angeordnet als in der Zuführeinheit 7.

Entlang der Transportrichtung 6 benachbarte Hängewaren 2 sind auf jeweils verschiedenen Transportschienen 5 angeordnet. Das Stauelement 15 ermöglicht das Stauen sämtlicher Hängewaren 2 in der Staueinheit und insbesondere unabhängig davon, auf welcher Transportschiene 5 die Hängewaren 2 angeordnet sind. Das Stauelement 15 befindet sich in einem Endabschnitt der Staueinheit 8. Das Stauelement 15 ist der Abführeinheit 9 zugewandt.

Die Staueinheit 8 weist ferner ein der Zuführeinheit 7 zugewandtes Stopperelement 18 auf. Das Stopperelement 18 dient zum Stoppen des Zuführens der Hängewaren 2. Das Stopperelement 18 erstreckt sich in einer horizontalen Richtung senkrecht zur Transportrichtung 6 über beide Transportschienen 5 hinweg. Das Stopperelement 18 ist geeignet, das Zuführen der Hängewaren 2 für sämtliche Transportschienen 5 zu stoppen.

Die Staueinheit 8 umfasst ferner einen Füllstandssensor 19, der zum Erfassen eines Füllstands der Staueinheit 8 dient. Als Füllstand der Staueinheit 8 wird insbesondere die Anzahl der Hängewaren 2 in der Staueinheit 8 verstanden. Der Füllstandssensor 19 kann beispielsweise eine nicht dargestellte Leseeinheit aufweisen, die zum Lesen des Hängewarencodes der jeweiligen Hängeware 2 dient. Dazu ist der Füllstandssensor 19 derart an den Transportschienen 5 angeordnet, dass ein, insbesondere automatisiertes, Lesen der Hängewarencodes an den Adaptern 4 ermöglicht ist. Gemäß dem gezeigten Ausführungsbeispiel ist der Füllstandssensor 19 an einer Unterseite der Transportschienen, also den Hängewaren 2 und den Adaptern 4 zugewandt, angeordnet. Die in dem Füllstandssensor 19 integrierte Leseeinheit kann also in einer vertikalen Richtung unterhalb der Transportschienen 5 angeordnet und horizontal orientiert sein, um die an der Transportschiene 5 nach unten vorstehenden Adapter mit den daran vorgesehenen Hängewarencodes zu lesen.

Die Zuführweiche 11 umfasst ein Weichenstellelement 20 sowie eine mittels des Weichenstellelements 20 stellbare Weichenzunge 21. Das Stellelement 20 dient zum Stellen der Weichenzunge 21 derart, dass die Hängewaren 2 entweder der einen oder der anderen Transportschiene 5 der Staueinheit 8 zugeführt werden. Die Weichenzunge 21 ist also derart verlagerbar ausgeführt, dass in einer ersten Zuführanordnung die Zuführeinheit 7 mit der einen Transportschiene 5 und in einer zweiten Zuführanordnung die Zuführeinheit 7 mit der anderen Transportschiene 5 verbindbar ist. Gemäß dem in Fig. 2 gezeigten Ausführungsbeispiel befindet sich die Weichenzunge 21 in der ersten Zuführanordnung. Die im Bereich der Zuführweiche 11 angeordnete Hängeware 2 wird der ersten, in Fig. 2 oben dargestellten Transportschiene 5 zugeführt.

Entsprechend weist die Abführweiche 13 ein Stellelement 20 und eine Weichenzunge 21 auf. Die Funktionsweise der Abführweiche 13 ist entsprechend der der Zuführweiche 11. Gemäß dem gezeigten Zustand des Ausführungsbeispiels in Fig. 2 befindet sich die Weichenzunge 21 der Abführweiche 13 in einer zweiten Abführanordnung, in der die Abführeinheit 9 mit der zweiten, in Fig. 2 unten angeordneten Transportschiene 5 verbunden ist.

Die erfindungsgemäße Vorrichtung umfasst ferner eine nicht dargestellte Steuerungseinheit, die den gesteuerten Transport der Hängewaren 2 in der Vorrichtung 1 ermöglicht. Die Steuerungseinheit ist insbesondere zum automatisierten und automatischen Bilden des Blocks der Hängewaren 2 mit dem Füllstandssensor 19, der Zuführvereinzelungseinheit 10, der Zuführweiche 11, der Abführvereinzelungseinheit 12, der Abführweiche 13, dem Stauelement 15 und/oder dem Stopperelement 18 in Signalverbindung.

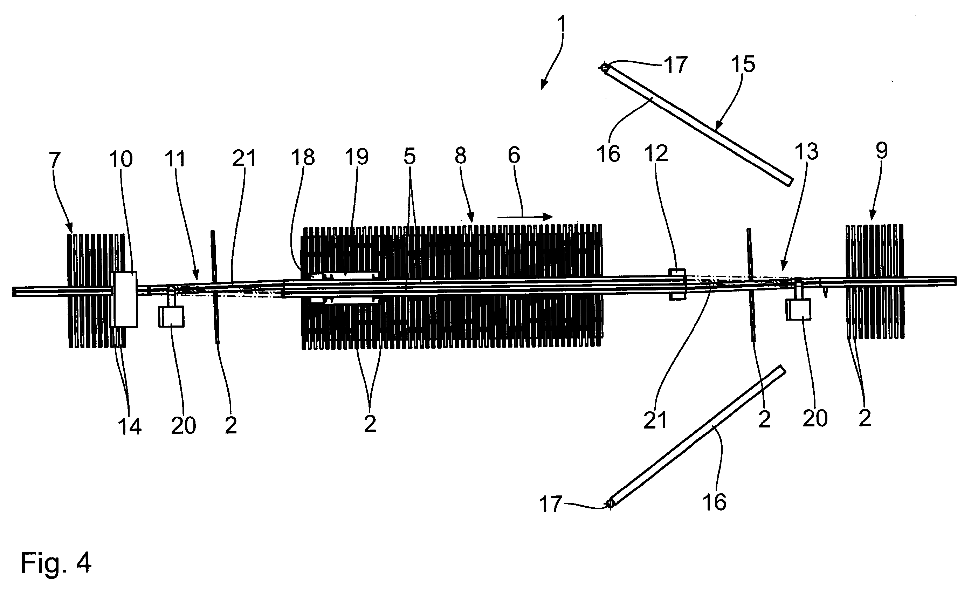

Im Folgenden wird anhand der Fig. 1 bis 4 das erfindungsgemäße Verfahren zum automatischen Bilden des Blocks der Hängewaren 2 für die Einlagerung des Blocks in das Hochregallager näher erläutert. Ausgehend von der geschlossenen Position des Stauelements 15 gemäß Fig. 1 und 2 werden Hängewaren 2 zunächst von einem nicht dargestellten Wareneingang in die Zuführeinheit 7 transportiert. Aufgrund der geneigten Anordnung der Transportschienen 5 neigen die Adapter 4 einem selbsttätigen Transport in Folge der Schwerkraft entlang der Transportrichtung 6. Ein selbsttätiger Transport der Adapter 4 mit den daran befestigten Hängewaren 2 ist durch die Zuführvereinzelungseinheit 10 gehindert. Die Zuführvereinzelungseinheit 10 kann gesteuert und/oder geregelt, insbesondere zeitgesteuert, jeweils eine Hängeware 2 der Zuführeinheit 7 freigeben. Dadurch wird die freigegebene Hängeware 2 entlang der Transportrichtung 6 vereinzelt transportiert. Die vereinzelt transportierte Hängeware 2 wird der Zuführweiche 11 zugeführt und in Abhängigkeit der Zuführanordnung entweder der einen oder der anderen Transportschiene 5 zugeführt. Innerhalb der Staueinheit 8 wird die Hängeware 2 bis zu dem Stauelement 15 gefördert. An dem Stauelement 15 ist eine weitere Förderung der Hängeware 2 verhindert. In der Staueinheit 8 werden die Hängewaren 2 bei geschlossener Anordnung des Stauelements 15 gestaut. Dadurch bildet sich der Block der Hängewaren 2. Mit zunehmender Dauer, d. h. mit zunehmender Anzahl zugeführter Hängewaren 2, wächst die Länge des Blocks entlang der Transportrichtung 6. Der Füllstandssensor 19 erfasst die aktuelle Länge des Blocks entlang der Transportrichtung 6. Bei Erreichen einer vorgebbaren maximalen Blocklänge kann der Füllstandssensor 19 über die nicht dargestellte Steuerungseinheit oder direkt an das Stopperelement 18 ein Signal übertragen, das ein weiteres Zuführen von Hängewaren 2 in die Staueinheit 8 verhindert. Der so gebildete Block von Hängewaren 2 wird anschließend zu der Abführeinheit 9 abgeführt. Dazu wird zunächst das Stopperelement 18 betätigt, so dass ein Weitertransport der zuvor aufgestauten Hängewaren 2 aus der Staueinheit 8, insbesondere selbsttätig, in Folge der Schwerkraft erfolgen kann. Die Hängewaren 2 werden an der Abführvereinzelungseinheit 12 vereinzelt und der Weichenzunge 21 der Abführweiche 13 vereinzelt und insbesondere gezielt zugeführt. Mittels des Stellelements 20 der Abführweiche 13 ist gewährleistet, dass die Hängewaren 2 in der gestauten Anordnung, insbesondere abwechselnd von den beiden Transportschienen 5, entnommen werden. Die geöffnete Anordnung der Flügel 16 des Stauelements 15 ist insbesondere Fig. 4 zu entnehmen. Daraus ergibt sich, dass die Flügel 16 um die vertikale Schwenkachse 17 jeweils um etwa 45° verschwenkt worden sind.

Insbesondere dann, wenn verschiedenartige Hängewaren 2 entlang der Vorrichtung 1 transportiert werden sollen, ist es denkbar, den Zuführzyklus, also das wechselweise Zuführen der Hängewaren 2, zu jeweils einer der Transportschienen 5 zu verändern. Beispielsweise ist es auch möglich, dass zwei entlang der Transportrichtung 6 in der Zuführeinheit 7 benachbart angeordnete Hängewaren 2 derselben Transportschiene 5 der Staueinheit 8 zugeführt werden; insbesondere dann, wenn eine zuvor der jeweils anderen Transportschiene 5 zugeführte Hängeware 2 eine besonders kleine Länge entlang der Transportrichtung 6 aufweist. Die jeweilige Länge der Hängeware 2 kann beispielsweise in dem Hängewarencode, der über den Adapter lesbar ist, zugeordnet sein. Insbesondere ist es denkbar, in der Staueinheit 8 mindestens eine dritte Transportschiene 5 vorzusehen, um eine Redundanz zu schaffen, falls eine der Transportschienen ausfällt und für einen Betrieb der Vorrichtung 1 nicht zur Verfügung steht. Dann verbleiben immer noch zwei Transportschienen 5, die einen reibungslosen Betrieb der Vorrichtung 1 gewährleisten.

In einem weiteren, nicht dargestellten Ausführungsbeispiel ist die erfindungsgemäße Vorrichtung in einem Hängewarenlager integriert. Das bedeutet, dass das Hängewarenlager nebeneinander angeordnete Schienen als Lagerschienen zum platzsparenden Lagern der Hängewaren aufweist. Die Transportschienen sind Lagerschienen.

## Patentansprüche

1. Vorrichtung zum platzsparenden Anordnen von Hängewaren (2), wobei ie Vorrichtung (1) umfasst
- eine Vielzahl an Hängewaren (2) - eine Zuführeinheit (7) zum Zuführen der Hängewaren (2) entlang einer Transportrichtung (6),
- eine Anordeneinheit (8) zum Anordnen der Hängewaren (2), wobei die Anordeneinheit (8) mindestens zwei entlang der Transportrichtung (6) nebeneinander und parallel zueinander angeordnete Transportschienen (5) aufweist,
**dadurch gekennzeichnet, dass** ein Abstand zwischen zwei benachbarten Transportschienen (5) kleiner ist als eine Breite der Hängewaren (2).

2. Vorrichtung gemäß Anspruch 1, **gekennzeichnet durch** eine entlang der Transportrichtung (6) der Anordeneinheit (8) stromaufwärts angeordnete Zuführvereinzelungseinheit (10) zum vereinzelten Zuführen der Hängewaren (2).

3. Vorrichtung gemäß einem der vorstehenden Ansprüche, **gekennzeichnet durch** eine Zuführweiche (11) zum gezielten Zuführen der Hängewaren (2) zu jeweils einer der mindestens zwei Transportschienen (5).

4. Vorrichtung gemäß einem der vorstehenden Ansprüche, **dadurch gekennzeichnet, dass** die Anordeneinheit (8) als Staueinheit ausgeführt ist, die ein Stauelement (15) zum Stauen des Transports der Hängewaren (2) an den mindestens zwei Transportschienen (5) entlang der Transportrichtung (6) aufweist.

5. Vorrichtung gemäß einem der vorstehenden Ansprüche, **dadurch gekennzeichnet, dass** die Anordeneinheit (8) ein Stopperelement (18) zum Stoppen des Zuführens der Hängewaren (2) in die Anordeneinheit (8) entlang der Transportrichtung (6) aufweist.

6. Vorrichtung gemäß Anspruch 5, **dadurch gekennzeichnet, dass** genau ein Stopperelement (18) vorgesehen ist, das allen Transportschienen (5) gleichermaßen zugeordnet ist.

7. Vorrichtung gemäß einem der vorstehenden Ansprüche, **dadurch gekennzeichnet, dass** die Anordeneinheit (8) einen Füllstandssensor (19) zum Erfassen eines Füllstands von Hängewaren (2) in der Anordeneinheit (8) aufweist.

8. Vorrichtung gemäß Anspruch 7, **dadurch gekennzeichnet, dass** der Füllstandssensor (19) eine Leseeinheit aufweist, die zum Lesen eines jeweils einer Hängeware (2) zugeordneten Hängewarencodes dient, wobei ein Hängewarencode insbesondere jeweils an einem Adapter (4) zur Aufnahme eines Kleiderbügels (3) angebracht ist.

9. Vorrichtung gemäß einem der vorstehenden Ansprüche, **gekennzeichnet durch** eine entlang der Transportrichtung (6) der Anordeneinheit (8) stromabwärts angeordnete Abführvereinzelungseinheit (12) zum vereinzelten Abführen der Hängewaren (2) aus der Anordeneinheit (8), wobei insbesondere eine Abführeinheit (9) zum Abführen der gestauten Hängewaren (2) dient.

10. Vorrichtung gemäß einem der vorstehenden Ansprüche, **gekennzeichnet durch** eine entlang der Transportrichtung (6) der Anordeneinheit (8) stromabwärts angeordnete Abführweiche (13) zum Zusammenführen der an den mindestens zwei Transportschienen (5) aufgestauten Hängewaren (2).

11. Vorrichtung gemäß einem der vorstehenden Ansprüche, **gekennzeichnet durch** eine Steuerungseinheit zum gesteuerten Transport der Hängewaren (2), wobei die Steuerungseinheit insbesondere mit einem Füllstandssensor (19), einer Zuführvereinzelungseinheit (10), einer Zuführweiche (11), einer Abführvereinzelungseinheit (12), einer Abführweiche (13), einem Stauelement (15) und/oder einem Stopperelement (18) in Signalverbindung steht.

12. Verfahren zum platzsparenden Anordnen von Hängewaren (2), insbesondere für eine Einlagerung der Hängewaren (2) in ein Hochregallager, wobei das Verfahren die Schritte umfasst
- Zuführen der Hängewaren (2) entlang einer Transportrichtung (6) mittels einer Zuführeinheit (7),
- Aufteilen der zugeführten Hängewaren (2) auf mindestens zwei entlang der Transportrichtung (6) nebeneinander und parallel zueinander angeordnete Transportschienen (5) einer Anordeneinheit (8),
- Anordnen der Hängewaren (2) an den Transportschienen (5),
**dadurch gekennzeichnet, dass** ein Abstand zwischen zwei benachbarten Transportschienen (5) kleiner ist als eine Breite der Hängewaren (2).

13. Verfahren gemäß Anspruch 12, **gekennzeichnet durch** ein gezieltes Zuführen der Hängewaren (2) zu jeweils einer der mindestens zwei Transportschienen (5) mittels einer Zuführweiche (11).

14. Verfahren gemäß Anspruch 13, **dadurch gekennzeichnet, dass** zwei in der Zuführeinheit (7) entlang der Transportrichtung (6) benachbart angeordnete Hängewaren (2) verschiedenen Transportschienen (5) zugeführt werden.

15. Verfahren gemäß einem der Ansprüche 12 bis 14, **gekennzeichnet durch** ein Erfassen eines Füllstands der Anordeneinheit (8) mittels eines, insbesondere mit einer Steuerungseinheit in Signalverbindung stehenden, Füllstandssensors (19), der insbesondere bei Erreichen eines maximalen Füllstands ein Signal an die Steuerungseinheit übermittelt zum Freigeben der gestauten Hängewaren (2) an die Abführeinheit (9).

## Claims

1. Assembly for arranging hanging goods in a space-saving manner (2), the assembly (1) comprising
a plurality of hanging goods (2),
- a feeding unit (7) for feeding the hanging goods (2) in a transport direction (6),
- an arrangement unit (8) for arranging the hanging goods (2),
wherein the arrangement unit (8) has at least two transport rails (5) arranged adjacent to one another, and parallel to each other, in the transport direction (6),
**characterized in that** a distance between two adjacent transport rails (5) is smaller than a width of the hanging goods (2).

2. Assembly according to claim 1, **characterized by** a feed separating unit (10) arranged upstream of the arrangement unit (8) when seen in the transport direction (6) for feeding the hanging goods (2) in a separated manner.

3. Assembly according to one of the preceding claims, **characterized by** a feed switch (11) for the targeted feeding of the hanging goods (2) to a respective one of the at least two transport rails (5).

4. Assembly according to one of the preceding claims, **characterized in that** the arrangement unit (8) is configured as an accumulation unit which is provided with an accumulation member (15) for retarding the transport of the hanging goods (2) along the at least two transport rails (5) in the transport direction (6).

5. Assembly according to one of the preceding claims, **characterized in that** the arrangement unit (8) is provided with a stopping member (18) to stop the feeding of the hanging goods (2) into the arrangement unit (8) in the transport direction (6).

6. Assembly according to claim 5, **characterized in that** exactly one stopping member (18) is provided which is assigned to all transport rails (5) equally.

7. Assembly according to one of the preceding claims, **characterized in that** the arrangement unit (8) has a fill level sensor (19) for detecting a fill level of hanging goods (2) in the arrangement unit (8).

8. Assembly according to claim 7, **characterized in that** the fill level sensor (19) has a reading unit that is adapted to read a hanging goods code assigned to a respective piece of goods (2), wherein a hanging goods code is in each case in particular attached to an adapter (4) for receiving a clothes hanger (3).

9. Assembly according to one of the preceding claims, **characterized by** a discharge separating unit (12) arranged downstream of the arrangement unit (8) when seen in the transport direction (6) for discharging the hanging goods (2) from the arrangement unit (8) in a separated manner, wherein in particular a discharging unit (9) is used to discharge the accumulated hanging goods (2).

10. Assembly according to one of the preceding claims, **characterized by** a discharge switch (13) arranged downstream of the arrangement unit (8) when seen in the transport direction (6) for moving together the hanging goods (2) accumulated along the at least two transport rails (5).

11. Assembly according to one of the preceding claims, **characterized by** a control unit for a controlled transport of the hanging goods (2), wherein the control unit is in signal communication in particular with a fill level sensor (19), a feed separating unit (10), a feed switch (11), a discharge separating unit (12), a discharge switch (13), an accumulation member (15) and/or a stopping member (18).

12. Method for arranging hanging goods in a space-saving manner (2), in particular for storing the hanging goods (2) in a high bay warehouse, the method comprising the steps of
- feeding the hanging goods (2) in a transport direction (6) by means of a feeding unit (7);
- distributing the hanging goods (2) thus fed among at least two transport rails (5) of an arrangement unit (8), said transport rails (5) being arranged adjacent to one another, and parallel to each other, in the transport direction (6);
- arranging the hanging goods (2) along the transport rails (5),
**characterized in that** a distance between two adjacent transport rails (5) is smaller than a width of the hanging goods (2).

13. Method according to claim 12, **characterized by** a targeted feeding of the hanging goods (2) to a respective one of the at least two transport rails (5) by means of a feed switch (11).

14. Method according to claim 13, **characterized in that** two pieces of goods (2) arranged adjacent to one another in the feeding unit (7) when seen in the transport direction (6) are fed to different transport rails (5).

15. Method according to one of claims 12 to 14, **characterized by** a detection of a fill level of the arrangement unit (8) by means of a fill level sensor (19), which is in particular in a signal communication with a control unit, the fill level sensor (19) transmitting a signal to the control unit in order to release the accumulated hanging goods (2) to the discharging unit (9) as soon as a maximum fill level is reached.

## Revendications

1. Dispositif pour la disposition peu encombrante d'articles suspendus (2), ledit dispositif (1) comprenant
- une pluralité d'articles suspendus (2),
- une unité d'alimentation (7) pour amener des articles suspendus (2) dans une direction de transport (6),
- une unité de rangement (8) pour le rangement des articles suspendus (2), ladite unité de rangement (8) comportant au moins deux rails de transport (5) disposés côte à côte et parallèles l'un à l'autre dans la direction de transport (6),
**caractérisé en ce qu'**un espacement entre deux rails de transport (5) contigus est inférieur à une largeur des articles suspendus (2).

2. Dispositif selon la revendication 1, **caractérisé par** une unité d'alimentation séparée (10) disposée en amont de l'unité de rangement (8) dans la direction de transport (6) pour l'alimentation un par un des articles suspendus (2).

3. Dispositif selon l'une des revendications précédentes, **caractérisé par** un aiguillage d'alimentation (11) pour une alimentation ciblée en articles suspendus (2) à un desdits au moins deux rails de transport (5).

4. Dispositif selon l'une des revendications précédentes, **caractérisé en ce que** l'unité de rangement (8) est réalisée comme unité de regroupement comportant un élément de retenue (15) pour le regroupement de transport des articles suspendus (2) sur lesdits au moins deux rails de transport (5) dans la direction de transport (6).

5. Dispositif selon l'une des revendications précédentes, **caractérisé en ce que** l'unité de rangement (8) comporte un élément d'arrêt (18) pour l'arrêt de l'alimentation en articles suspendus (2) dans l'unité de rangement (8) dans la direction de transport (6).

6. Dispositif selon la revendication 5, **caractérisé en ce qu'**un seul élément d'arrêt (18) est prévu, lequel est affecté d'une manière identique à tous les rails de transport (5).

7. Dispositif selon l'une des revendications précédentes, **caractérisé en ce que** l'unité de rangement (8) comporte un capteur de capteur de niveau (19) pour la détection d'un niveau d'accumulation des articles suspendus (2) dans l'unité de rangement (8).

8. Dispositif selon la revendication 7, **caractérisé en ce que** le capteur de niveau (19) comprend une unité de lecture destinée à lire un code d'article associé à chaque article suspendu (2), un code d'article étant en particulier appliqué sur un adaptateur (4) respectif pour la réception d'un cintre (3).

9. Dispositif selon l'une des revendications précédentes, **caractérisé par** une unité d'évacuation séparée (12) disposée en aval de l'unité de rangement (8) dans la direction de transport (6) pour l'évacuation un par un des articles suspendus (2) hors de l'unité de rangement (8), une unité d'évacuation (9) étant en particulier destinée à l'évacuation des articles suspendus (2) regroupés.

10. Dispositif selon l'une des revendications précédentes, **caractérisé par** un aiguillage d'évacuation (13) disposé en aval de l'unité de rangement (8) dans la direction de transport (6) pour le rassemblement des articles suspendus (2) regroupés sur lesdits au moins deux rails de transport (5).

11. Dispositif selon l'une des revendications précédentes, **caractérisé par** une unité de commande pour le transport contrôlé des articles suspendus (2), ladite unité de commande étant en particulier en liaison de signal avec un capteur de niveau (19), une unité d'alimentation séparée (10), un aiguillage d'alimentation (11), une unité d'évacuation séparée (12), un aiguillage d'évacuation (13), un élément de retenue (15) et/ou un élément d'arrêt (18).

12. Procédé de disposition peu encombrante d'articles suspendus (2), destiné en particulier au stockage des articles suspendus (2) dans un entrepôt à hauts rayonnages, ledit procédé comprenant les étapes suivantes:
- alimentation en articles suspendus (2) dans une direction de transport (6) au moyen d'une unité d'alimentation (7),
- répartition des articles suspendus (2) amenés sur au moins deux rails de transport (5) d'une unité de rangement (8), disposés côte à côte et parallèles l'un à l'autre dans la direction de transport (6),
- rangement des articles suspendus (2) sur les rails de transport (5),
**caractérisé en ce qu'**un espacement entre deux rails de transport (5) contigus est inférieur à une largeur des articles suspendus (2).

13. Procédé selon la revendication 12, **caractérisé par** une alimentation ciblée en articles suspendus (2) à un desdits au moins deux rails de transport (5) au moyen d'un aiguillage d'alimentation (11).

14. Procédé selon la revendication 13, **caractérisé en ce que** deux articles suspendus (2) contigus dans l'unité d'alimentation (7) dans la direction de transport (6) sont conduits vers des rails de transport (5) différents.

15. Procédé selon l'une des revendications 12 à 14, **caractérisé par** une détection d'un niveau d'accumulation dans l'unité de rangement (8) au moyen d'un capteur de niveau (19) qui est en particulier en liaison de signal avec l'unité de commande, et qui transmet un signal à l'unité de commande pour le dégagement des articles suspendus (2) regroupés vers l'unité d'évacuation (9), en particulier si un niveau d'accumulation maximal est atteint.
